# EUROPEAN PATENT APPLICATION

(11) **EP 1 959 407 A2**
(43) Date of publication of application: **20.08.2008**
(21) Application number: 07121653.5
(22) Date of filing: 27.11.2007
(51) Int. Cl.: G07F 17/32, G06F 3/041

(54) **Gaming machine with touch screen**

(30) Priority: 27.11.2006 AU 2006906624
(71) Applicant: Aristocrat Technologies Australia PTY Ltd, Lane Cove, NSW 2066 (AU)
(72) Inventor: Muir, Robert Linley, Lane Cove, New South Wales 2066 (AU)
(74) Representative: van Westenbrugge, Andries

(57) **Abstract**

A method of reconfiguring the touch screen of a gaming machine having a touch screen and associated display, and a tracking input device, the method comprising: providing a predetermined authorization sequence to the tracking input device; and in response to receipt by the tracking input device of the predetermined authorization sequence, initiating a reconfiguration process for the touch screen display.

## Description

### Field of the Invention

The present invention relates generally to gaming machines with touch screens.

### Background of the Invention

Touch screens are typically composed of a sheet of glass with a conductive coating, such as indium tin oxide with at least four terminal electrode connections, one at each corner. The touch screen may, for example, be configured as a capacitive or resistive touch screen so that contact with the touch screen alters the electrical properties of the screen to allow determination of the location of contact. Touch screens may use either CRT or LCD display technology.

Typically, a finger, stylus, or top sheet is used to draw or inject current at a point of contact on the screen. The current is then distributed to or drawn from the electrodes dependent on the location of the point of contact. The location of contact on the touch screen is therefore determined by how the current is divided amongst the electrode terminals.

The measured current is passed to an analog to digital converter for conversion to a digital signal, and a hardware driver then reports the coordinates to a central processing unit of a computing system, where the coordinates are processed.

Environmental factors such as wear and tear, including scratching and abrasions, ageing of the touch screen, contaminants or cleaning solutions, dirt, dust or condensation can cause the accuracy of the touch screen to diminish over time. One way in which the accuracy of the touch screen declines is that the determined point of contact and the underlying region of the screen can become misaligned. This situation can lead to significant frustration in the operator of the touch screen as their contact selection is not accurately reflected by actions of the associated computer.

Ongoing repair and monitoring of touch screen systems usually involves a technician performing a service in the field. In performing this service in devices such as gaming machines with a limited user interface, the service activities may require use of the touch screen. However, where the touch screen itself requires service, difficulties can arise. This difficultly may be particularly apparent where there is misalignment between the determined point of contact on the touch screen and the underlying screen regions that the technician seeks to activate.

The servicing of gaming machines with touch screens in large gaming venues is a time consuming and costly exercise. There is therefore a need to reduce the time required by servicing personnel to reconfigure touch screens.

### Summary of the invention

According to a first aspect, the invention broadly resides in a method of reconfiguring the touch screen of a gaming machine having a touch screen and associated display, and a tracking input device, the method comprising:
providing a predetermined authorization sequence to the tracking input device; and in response to receipt by the tracking input device of the predetermined authorization sequence, initiating a reconfiguration process for the touch screen.

The method may further comprise initiating the reconfiguration process in response to receipt by the tracking input device of the predetermined authorization sequence and receipt at another input device of an additional authorization sequence. The additional authorization sequence may be provided by actuation of one or more buttons of a player interface of the gaming machine. Optionally, the additional authorization sequence may be provided by actuation of the one or more of the buttons in a predetermined sequence.

The predetermined authorization sequence may be stored on a token readable by the tracking input device. The token may be a magnetic stripe card. Alternatively, the token may be a smart card. The magnetic stripe card or smart card may be an employee card issued to a technician. Alternatively, the token may be issued by the gaming establishment as an in-house identification mechanism.

The reconfiguration process may comprise a calibration sequence, which may include prompting an operator to contact the screen at two or more locations and then using the determined point of contact to calibrate the touch screen. Preferably the calibration sequence includes prompting the operator to contact the screen at four or more locations.

According to a second aspect, the invention broadly resides in a method of reconfiguring the touch screen of a gaming machine having a touch screen and associated display, and a communication device in communication with a remote controller, the method comprising:
using the remote controller to communicate a predetermined authorization sequence to the communication device; and in response to receipt by the communication device of the predetermined authorization sequence, initiating a reconfiguration process for the touch screen.

The step of initiating a reconfiguration process may comprise preventing play on the gaming machine and awaiting receipt of another authorization sequence at the gaming machine before commencing a reconfiguration process. The step of awaiting receipt of another authorization sequence may comprise monitoring a user interface of the gaming machine. The monitored user interface may comprise a card reader and/or one or more buttons in a bank of buttons.

According to a third aspect, the invention broadly resides in a gaming machine comprising a display with an associated touch screen and a user interface comprising a tracking input device, the gaming machine providing a game in which a plurality of symbols are presented on the display and if a winning combination occurs, the gaming machine awards an award, the gaming machine including a controller that initiates a reconfiguration process for reconfiguring the touch screen display on receipt of a predetermined authorization sequence at the tracking input device of the gaming machine.

According to a fourth aspect, the invention broadly resides in a gaming system comprising a plurality of gaming machine each comprising a user interface; a touch screen with an associated display; and a communications interface to a remote controller, wherein at least one of said plurality of gaming machines is operable to receive a predetermined authorisation sequence and in response thereto initiate a reconfiguration process for the touch screen.

The gaming machine may initiate the reconfiguration process by preventing play on the gaming machine and awaiting receipt of another authorization sequence at the gaming machine before commencing the reconfiguration process.

Further aspects of the present invention will become apparent from the following description, given by way of example only and with reference to the accompanying drawings.

### Brief Description of the Drawings

Figure 1: shows diagrammatically, a view of a gaming machine suitable for implementing the present invention.
Figure 2: shows a block diagram of gaming apparatus suitable for implementing the present invention.
Figure 3: shows a block diagram of components of the memory of the gaming apparatus represented in Figure 2.
Figure 4: shows diagrammatically, a network gaming system suitable for implementing the present invention.
Figure 5: shows a flow chart of a process according to an embodiment of the present invention.

### Detailed Description

Reference is made hereinafter to one particular embodiment of the touch screen reconfiguration method and system in the context of a networked gaming machine.

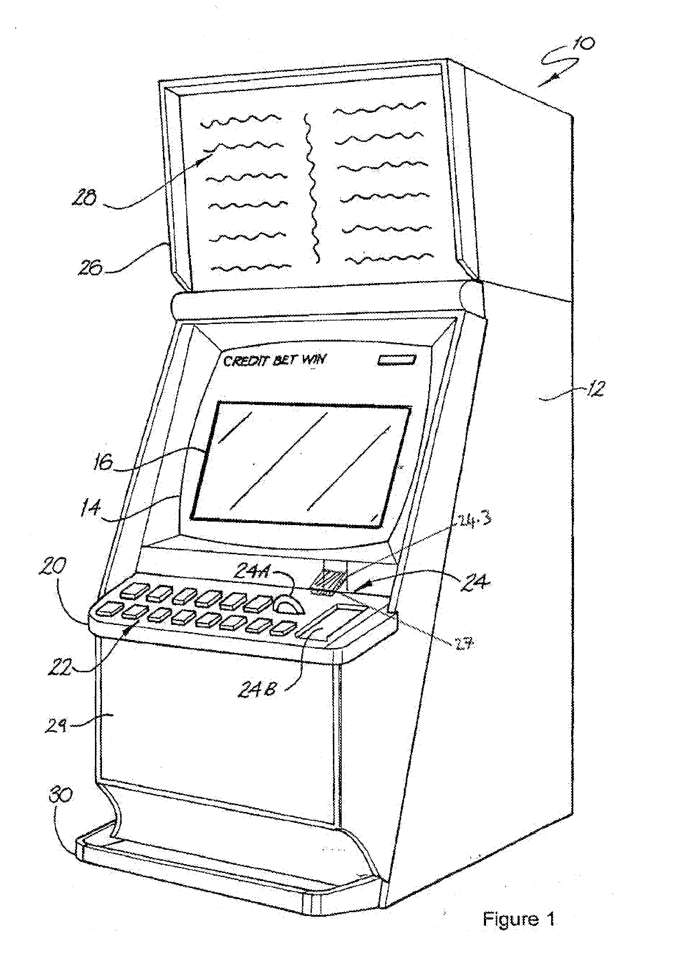

Figure 1 of the accompanying drawings shows one example of a gaming machine suitable for implementing the present invention and generally referenced by arrow 10. The gaming machine 10 includes a console 12 having a display 14 on which is displayed representations of a game 16, that can be played by a player. A mid-trim 20 of the gaming machine 10 houses a bank of buttons 22 for enabling a player to play the game 16. The mid-trim 20 also houses a credit input mechanism 24 including a coin input chute 24A and a bill collector 24B and a card reader 24.3. A top box 26 may carry artwork 28, including for example, pay tables and details of bonus awards and other information or images relating to the game. Further artwork and/or information may be provided on the front panel 29 of the console 12.

A coin tray 30 is mounted beneath the console 12 for cash payouts from the gaming machine 10. Alternatively, the player may remove the credit held in the machine by transferring it to another machine or to a cashier. Where the player tracking card 27 is a smart card and credits are stored on the card, the payout mechanism may involve writing a new credit balance to the smart card.

The display 14 shown in Figure 1 is in the form of a video display unit, particularly a cathode ray tube screen device. Alternatively, the display 14 may be a liquid crystal display, plasma screen, any other suitable video display unit, or the visible portion of an electromechanical device. The display 14 is a touch screen display unit, and may be manufactured as such or subsequently retrofitted in the manner known in the art.

The top box 26 may also include a display, for example a video display unit, which may be of the same type as the display 14, or a different type of display.

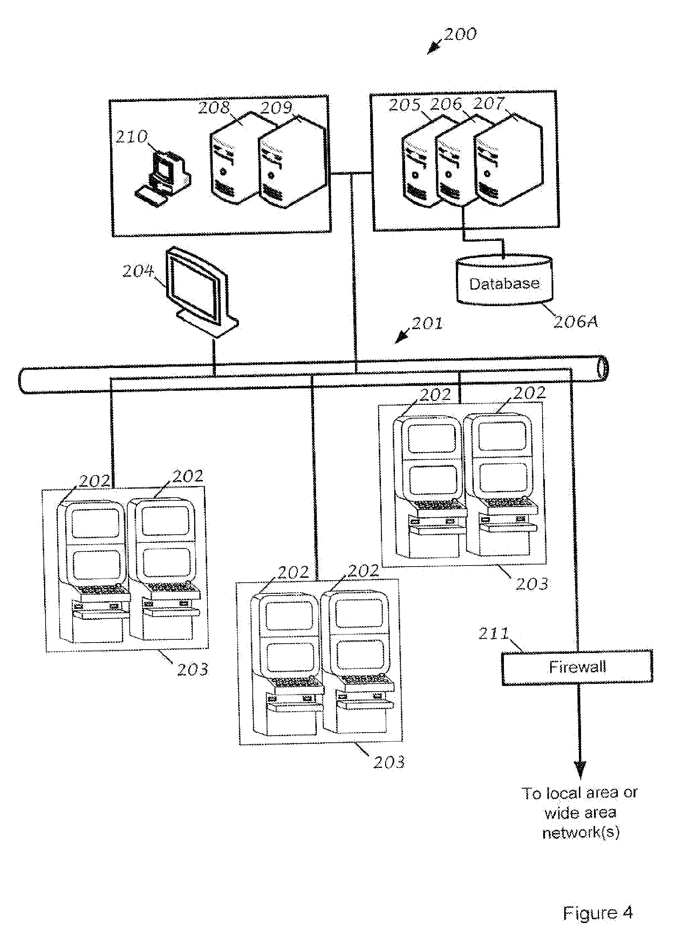

In gaming machines employing the present invention the gaming machine may also be connected via a computer network or other communications channel to other gaming machines and/or a system controller and credits can be applied to and cleared from the machine via the network (see Figure 4). The credits can either be established at a cashiers station and transferred to the machine or alternatively a player might already have credits in another machine in the network and which they transfer to a new machine that they wish to play.

A player tracking input device, such as the card reader 24.3, may be used to associate a particular player with a particular credit held in the system (either as data held in a machine or in the system controller or possibly in a further controller reserved for financial information). Player identification does not require knowing the actual identity of the player but to associate the player with a particular credit.

This may be achieved by using a player tracking card 27, which is a simple magnetic stripe card encoded with a unique code, that may be issued to the player either when they enter the establishment or when they establish a credit in the system and is read by the card reader 24.3. However other methods of player identification can be employed such as pin numbers, scannable tags of various known types such as magnetic stripe cards, smart cards, etc. iris recognition, finger prints or other bio-sensor systems.

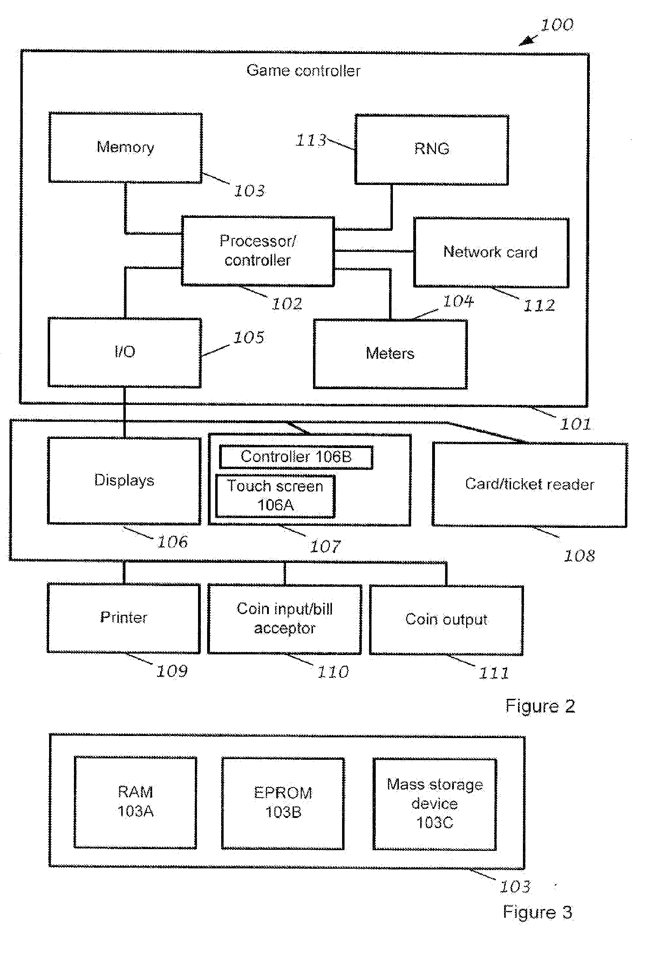

Figure 2 shows a block diagram of a gaming apparatus, generally referenced by arrow 100, suitable for implementing the present invention. The gaming apparatus 100 may, for example, be a gaming machine of the type shown in Figure 1. The gaming apparatus 100 may operate as a standalone gaming machine or as a networked gaming machine, communicating with other network devices, such as one or more servers or other gaming machines. The gaming apparatus 100 may also have distributed hardware and software components that communicate with each other directly or through a network. Accordingly, different reference numerals have been used in Figure 2 from Figure 1 for components that may be equivalent.

The gaming apparatus 100 includes a game controller 101, which in the illustrated example includes a computational device 102, which may be a microprocessor, microcontroller, programmable logic device or other suitable device. Instructions and data to control operation of the computational device 102 are stored in a memory 103, which is in data communication with the computational device 102. Typically, the gaming apparatus 100 will include both volatile and non-volatile memory and more than one of each type of memory, with such memories being collectively represented by the memory 103. The instructions to cause the controller 101 to implement the present invention will be stored in the memory 103. The memory 103 may include system code including firmware/software that provides for the detection of touches on the touch screen or for calibration or setting up of the touch screen 106A.

The gaming apparatus may include hardware meters 104 for the purposes of regulatory compliance and includes an input/output (I/O) interface 105 for communicating with the peripheral devices of the gaming apparatus 100. The input/output interface 105 and/or the peripheral devices may be intelligent devices with their own memory for instructions and data.

In the example shown in Figure 2, the peripheral devices that communicate with the controller are one or more displays 106, user input devices 107, a tracking input device such as a card and/or reader 108, a printer 109, a bill acceptor and/or coin input mechanism 110 and a coin output mechanism 111. One or more of the displays 106 is associated with a touch screen 106A, forming part of the user input devices 107. Additional devices may be included as part of the gaming machine 100, or devices omitted as required for the specific implementation.

The input/output device may be arranged to communicate with a touch screen controller 106B. Alternatively, the touch screen controller 106B may be mounted to a separate card, the card being able to be removably mounted in the gaming machine in communication with the input/output interface 105. The touch screen controller functions may also be performed by the gaming machine controller 102. Alternatively, the touch screen controller may be included as part of the display 106.

The touch screen controller 106B typically includes software/firmware for communication with the computational device 102.

In addition, the gaming machine 100 may include a communications interface, for example a network card 112. The network card, may for example, send status information, accounting information or other information to a central controller, server or database and receive data or commands from the central controller, server or database. One or more of the peripheral devices, for example the card/ticket reader 108 may be able to communicate directly with the network card 112.

The game controller 101 may also include a random number generator 113, which generates a series of random numbers that determine the outcome of a series of random game events played as part of a game on the gaming apparatus 100. As explained in more detail in relation to Figure 4, the computational device 102 may include two or more controllers or processors, which may be local or remote from each other and the displays 106.

Figure 3 shows an exemplary block diagram of the main components of the memory 103. The RAM 103A typically temporarily holds program files for execution by the computational controller 102 and related data. The EPROM 103B may hold be a boot ROM device and/or may contain some system or game related code. The system code may include firmware/software that provides for the detection of touches on the touch screen 106A or for calibration or setting up of the touch screen 106A.

The mass storage device 103C is typically used to store game programs, the integrity of which may be verified and/or authenticated by the computational controller 102 using protected code from the EPROM 103B or elsewhere.

Figure 4 shows a gaming system 200. The gaming system 200 includes a network 201, which for example may be an Ethernet network. Gaming devices 202, shown arranged in three banks 203 of two gaming devices 202 in Figure 4, are connected to the network 201. The gaming devices 202 may be gaming machines 10, as shown in Figure 1 or form part or all of another gaming apparatus 100. Single gaming devices 202 and banks 203 containing three or more gaming devices 202 may also be connected to the network 201.

Servers may also be connected to the network 201. For example, a game server 205 may generate game outcomes for games played on the gaming devices 202, a database management server 206 may manage the storage of game programs and associated data for downloading or access by the gaming devices 202 in a database 206A, and a jackpot server 207 may control one or more jackpots associated with the gaming devices 202.

Further servers may be provided to assist in the administration of the gaming system 200, including for example a gaming floor management server 208, and a licensing server 209 to monitor the use of licenses to particular games. An administrator terminal 210 is provided to allow an administrator to run the network 201 and the devices connected to the network.

The gaming system 200 may communicate with other gaming systems, other local networks, for example a corporate network and/or a wide area network such as the Internet through a firewall 211. In some embodiments of the present invention the gaming machines may download a first predetermined authorization sequence over the network. This sequence may operate to prevent play on the gaming machine, until the provision of a second authorization sequence at the gaming machine initiates a reconfiguration sequence.

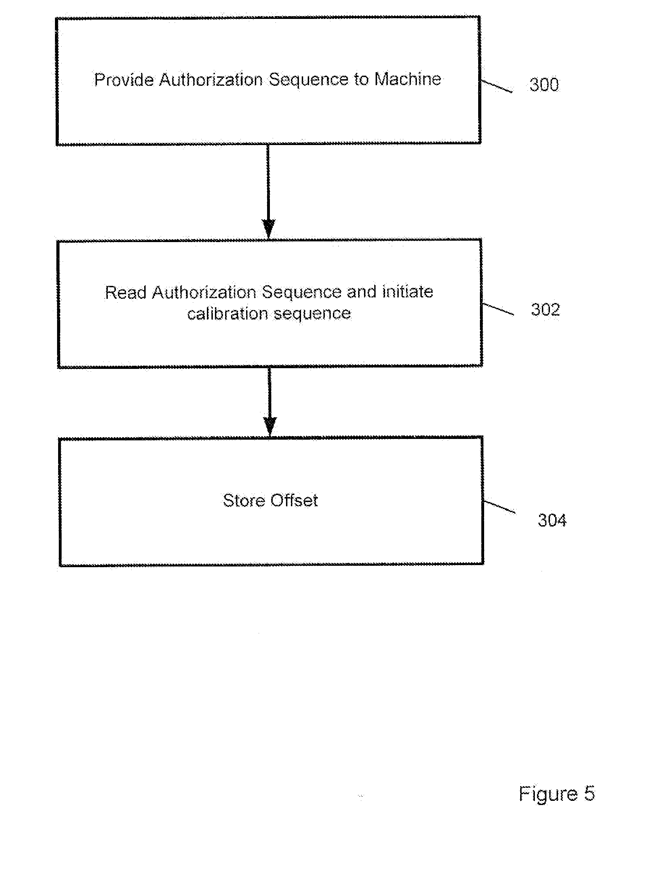

Figure 5 shows a process flow diagram of a process performed in accordance with an embodiment of the present invention. The process may be performed within the networked gaming system 200, using a gaming device 202, which may comprise part or all of a gaming apparatus 100 and the following description assumes this implementation. However, those skilled in the relevant arts will appreciate that the process will also be able to be implemented by other gaming systems, including stand alone gaming machines.

The authorization sequence is provided at step 300 to the gaming device 202.

The authorisation sequence may be provided to the tracking input device 108, in which case the predetermined authorization sequence may be stored on a token readable by the tracking input device. The token may be a magnetic stripe card or a smart card issued to a service technician. Alternatively, the token may be a ticket printed with a machine readable authorization sequence. The token may be issued by the gaming establishment as an in-house identification mechanism of the technician or may be issued by to the technician by their employer.

The tracking input device 108 may be configured to receive the predetermined authorization sequence in a number of ways. This could be through wireless communication, the scanning of the token, or biometric identification such as fingerprint recognition.

An additional authorization sequence may be provided to the gaming machine 10 so as to initiate the calibration sequence of the gaming machine. The additional authorization sequence may be provided by actuation of one or more of the buttons 22 of the gaming machine 10. Optionally, the additional authorization sequence may be provided by actuation of the one or more buttons 22 of the gaming machine 10 in a predetermined sequence.

Alternatively, the additional authorization sequence may be provided to a gaming machine 202 over the network 201 from the administrator terminal 210. The additional authorization sequence may operate to prevent play on the gaming machine until a technician supplies the additional authorization sequence to the machine 202 by providing the authorization sequence to the tracking input device 108, or otherwise pressing one or more buttons in the bank of buttons 22.

While the gaming machine 202 is awaiting receipt of another authorization sequence, it may monitor the user interface of the gaming machine, including the tracking input device 108 and one or more buttons in the bank of buttons 22.

Once the appropriate authorization sequence has been provided, a reconfiguration sequence is initiated at step 302. This sequence may include initiating a calibration routine stored in memory 103. As is known in the art, the calibration sequence may include contacting the screen at two or more locations. Preferably the calibration sequence includes contacting the screen at four or more locations.

In the calibration sequence a plurality of target sample points are displayed on the touch screen for actuation by the technician. Two, three or more target points may be utilised and displayed successively in the calibration process. The coordinates of the point actuated by the technician are captured.

The offset between the target point and the actuated point is determined by comparing the target point coordinates to those of the actuated point. Once the offset is determined, it can be used to compensate mismatches in translation, scaling that result from mismatches between the display and the touch screen above the display.

In step 304, the offset from the calibration sequence and any other calculated offset may be stored in the mass storage device 103C or other part of the memory 103 and reloaded in the gaming machine each time the gaming machine is turned on.

A player tracking input device 108, such as the card reader 24.3, may be used to associate a particular player with a particular credit held in the system. In an embodiment of the present invention, the same tracking input device may be used to perform an additional function of initiating a reconfiguration sequence which can involve recalibration of a touch screen. This sequence can be initiated in combination with an additional authorization provided other the network or through actuation of a predetermined sequence of buttons.

This is efficient for the technician, as it allows technicians to trigger the reconfiguration sequence easily, without requiring the technician to use a touch screen which has become misaligned. It also reduces the time taken by technicians when attempting to recalibrate touch screens.

The calibration sequence may end once the target points have been provided by the technician contacting the touch screen. Alternatively the calibration sequence may finish after a predetermined amount of time from the initiation of the reconfiguration sequence. Actuation of a predetermined sequence of buttons may also end the calibration sequence.

Once the required offset has been calculated, it may be stored and used to configure the settings of the gaming machine each time it is turned on. Other methods of calibration may also be used with the present invention.

Where in the foregoing description reference has been made to integers having known equivalents, then those equivalents are hereby incorporated herein as if individually set forth.

Those skilled in the relevant arts will appreciate that modifications and additions to the embodiments of the present invention may be made without departing from the scope of the present invention.

It will be understood that the invention disclosed and defined in this specification extends to all alternative combinations of two or more of the individual features mentioned or evident from the text or drawings. All of these different combinations constitute various alternative aspects of the invention.

It will also be understood that the term "comprises" (or its grammatical variants) as used in this specification is equivalent to the term "includes" and should not be taken as excluding the presence of other elements or features.

## Claims

1. A method of reconfiguring the touch screen of a gaming machine having a touch screen and associated display, and a tracking input device, the method comprising:
providing a predetermined authorization sequence to the tracking input device; and
in response to receipt of the predetermined authorization sequence, initiating a reconfiguration process for the touch screen.

2. A method of claim 1 wherein said tracking input device is configured to identify at least one player of said gaming machine.

3. A method of either claims 1 or 2 wherein an additional authorization sequence is received at a secondary input and the reconfiguration process is initiated in response to the receipt of both the predetermined authorization sequence and said additional authorization sequence.

4. A method of claim 3 wherein the additional authorization sequence is provided by the actuation of at least one button of a player interface of the gaming machine.

5. A method of claim 4 wherein the actuation of said at least one button is provided in a predetermined sequence.

6. A method of any one of claims 1 to 5 wherein the predetermined authorization sequence is stored on a token readable by the tracking input device,

7. A method of claim 6 wherein the token is at least one of the following:
a magnetic stripe card;
a smart card; and
a technician employee card.

8. A method of claim 6 wherein the token is associated with an identification issued by a gaming establishment.

9. A method of any one of claims 1 to 8 wherein the tracking input device is configured to operate as at least one of:
a wireless communication device;
a scanning device; and
a biometric identification device.

10. A method of any one of claims 1 to 9 wherein the reconfiguration process includes prompting an operator to contact the touch screen on at least one location, wherein the at least one location of contact is used to calibrate the touch screen.

11. A method of reconfiguring the touch screen of a gaming machine having a touch screen and associated display, and a communication device in communication with a remote controller, the method comprising:
the remote controller communicating a predetermined authorization sequence to the communication device; and
in response to receipt of said predetermined authorization sequence, initiating a reconfiguration process for the touch screen.

12. A method of claim 11 further comprising preventing play on the gaming machine and awaiting receipt of a second authorization sequence at the gaming machine before initiating said reconfiguration process.

13. A method of claim 12 further comprising monitoring a user interface of the gaming machine for said second authorization sequence, wherein said user interface comprises at least one of a card reader and at least one button.

14. A gaming machine comprising a display with an associated touch screen and a tracking input device, the gaming machine providing a game in which a plurality of symbols are presented on the display and if a winning combination occurs, the gaming machine awards an award, the gaming machine including a controller that initiates a reconfiguration process for reconfiguring the touch screen on receipt of a predetermined authorization sequence at the tracking input device of the gaming machine.

15. A gaming system comprising a plurality of gaming machines each comprising a user interface; a touch screen with an associated display; and a communications interface to a remote controller, wherein at least one of said plurality of gaming machines is operable to receive a predetermined authorisation sequence at the communications interface and in response thereto initiate a reconfiguration process for reconfiguring the touch screen.

16. A gaming system of claim 15 wherein at least one of the plurality of gaming machines is configured to prevent play on said gaming machine; await receipt of a second authorization sequence at the user interface; and initiate a reconfiguration process for reconfiguring the touch screen.

17. A method substantially as herein described with reference to any one of the embodiments shown in the accompanying drawings.

18. A gaming machine substantially as herein described with reference to any one of the embodiments shown in the accompanying drawings.
